# EUROPÄISCHE PATENTSCHRIFT

(11) **EP 0 808 436 B1**
(45) Veröffentlichungstag und Bekanntmachung des Hinweises auf die Patenterteilung: **02.09.1998**
(21) Anmeldenummer: 95936975.2
(22) Anmeldetag: 20.11.1995
(51) Int. Cl.: F16L 1/028

(54) **VERFAHREN ZUM HERAUSZIEHEN EINES IM ERDREICH VERLEGTEN HOHLKÖRPERS**
METHOD OF EXTRACTING A HOLLOW UNIT LAID IN THE GROUND
PROCEDE D'EXTRACTION D'UN OBJET CREUX ENTERRE

(30) Priorität: 10.02.1995 DE 19505517
(43) Veröffentlichungstag der Anmeldung: 26.11.1997
(73) Patentinhaber: Schwert, Siegfried, 14165 Berlin (DE)
(72) Erfinder: Schwert, Siegfried, 14165 Berlin (DE)
(74) Vertreter: Pfenning, Meinig & Partner
(86) Internationale Anmeldenummer: DE9501658
(87) Internationale Veröffentlichungsnummer: WO9624794

(56) Entgegenhaltungen:
- EP-A- 0 196 779
- DE-C- 3 733 463
- FR-A- 2 047 610
- US-A- 5 174 684

## Beschreibung

Die Erfindung betrifft ein Verfahren nach dem Oberbegriff des Anspruchs 1, wie es auch durch die DE-C-3733463 bekannt geworden ist.

Rohre beispielsweise für die Leitung von Trinkwasser können nach jahrzehntelangem Gebrauch undicht werden oder weisen andere Mängel auf, so daß ihr Ersatz durch neue Rohre erforderlich ist. Derartige Rohre für Hausanschlüsse bestanden in der Vergangenheit unter anderen auch aus Blei. Auch aus Gesundheits- und Umweltaspekten ist es daher geboten oder sogar vorgeschrieben, die Bleirohre durch Rohre aus einem anderen Material, vorzugsweise Polyethylen (PE), zu ersetzen. Dazu sollten die Bleirohre aus dem Erdreich heraus und die neuen Rohre an deren Stelle in das Erdreich eingezogen werden. Wenn man jedoch das vordere Ende des Bleirohres mit einem Zugelement verbindet und dann das Bleirohr herauszuziehen versucht, ist es aufgrund der geringen Zugfestigkeit des Bleis unvermeidbar, daß das Rohr sofort abreißt. Auch ist es nicht möglich, das Bleirohr durch Ansetzen am hinteren Ende aus dem Erdreich herauszudrücken, da es nicht ausreichend druckfest ist und sofort gestaucht würde.

Es ist daher die Aufgabe der vorliegenden Erfindung, ein Verfahren zum Herausziehen eines im Erdreich verlegten Hohlkörpers, welcher an seinen beiden offenen Enden zugänglich ist, anzugeben, bei dem weder ein Abreißen noch eine Stauchung des Hohlkörpers auftreten.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Dadurch, daß ein mit einem Innendruck beaufschlagbarer Schlauch im drucklosen Zustand in den Hohlkörper über mindestens einen Teil seiner Länge eingeführt wird, daß der Schlauch unter Anpressen an die Innenwand des Hohlkörpers mit einem Innendruck beaufschlagt wird und daß anschließend unter Aufrechterhaltung des Innendrucks der Hohlkörper in seiner Längsrichtung mittels des Schlauches selbst und/oder durch ein mit dem Schlauch in den Hohlkörper eingeführtes Zugelement, das durch Beaufschlagen des Schlauches mit Innendruck gegen die Innenwand des Hohlkörpers gepreßt wird, durch einen Reib- und Formschluß aus dem Erdreich herausgezogen wird, wird die erforderliche Zugkraft über die gesamte Länge des in den Hohlkörper eingeführten Schlauches ausgeübt, so daß ein Abreißen des Hohlkörpers ausgeschlossen ist.

Vorzugsweise weisen der Schlauch und gegebenenfalls das Zugelement eine Dehnbarkeit in Längsrichtung auf, die größer als die Dehnbarkeit des Hohlkörpers ist. Daher wird der Schlauch am Anfang des Zugvorganges gedehnt. Hierdurch wird erreicht, daß das Rohr nicht über seine gesamte Länge auf einmal schlagartig in Bewegung gesetzt wird, sondern die Bewegung beginnt am Zugende des Hohlkörpers und setzt sich dann unter Dehnung des Hohlkörpers oder durch Öffnen eventuell vorhandener Muffenverbindungen über dessen gesamte Länge bis zum anderen Ende fort. Hierdurch können die die für das Inbewegungsetzen des Hohlkörpers erforderlichen Zugkräfte deutlich herabgesetzt werden. Zur Erzielung dieser Wirkung kann es auch ausreichend sein, den Schlauch nur in Längsrichtung im Abstand voneinander mit Abschnitten zu versehen, deren Dehnbarkeit in Längsrichtung derjenigen des Rohres entspricht.

Falls die über den Schlauch übertragbaren Zugkräfte nicht ausreichend sind, empfiehlt es sich, mit dem Schlauch ein Zugelement in den Hohlkörper einzuführen, das durch Beaufschlagen des Schlauches mit Innendruck gegen die Innenwand des Hohlkörpers gepreßt und in diesem Zustand zum Herausziehen des Hohlkörpers verwendet wird.

Vorzugsweise wird hinter dem in Ziehrichtung hinteren Ende des Hohlkörpers ein neuer Hohlkörper angekoppelt, der gleichzeitig mit dem Herausziehen des Hohlkörpers in das Erdreich eingezogen wird. Somit finden Herausziehen des alten Hohlkörpers und Einziehen des neuen Hohlkörpers in einem Arbeitsgang statt.

Vorteilhaft werden der Schlauch und gegebenenfalls das Zugelement mittels eines Einziehseils in den Hohlkörper eingeführt, wobei der Schlauch und gegebenenfalls das Zugelement einerseits und das Einziehseil andererseits über einen Adapter miteinander gekoppelt werden können. Hierbei kann der Adapter beim Einführen des Schlauches und gegebenenfalls des Zugelementes das Innere des Hohlkörpers aufweiten, kalibrieren und/oder glätten, so daß das Einführen des nachgezogenen Schlauches und gegebenenfalls des Zugelementes erleichtert wird.

Die Erfindung wird im folgenden anhand eines in den Figuren dargestellten Ausführungsbeispiels näher erläutert. Es zeigen:

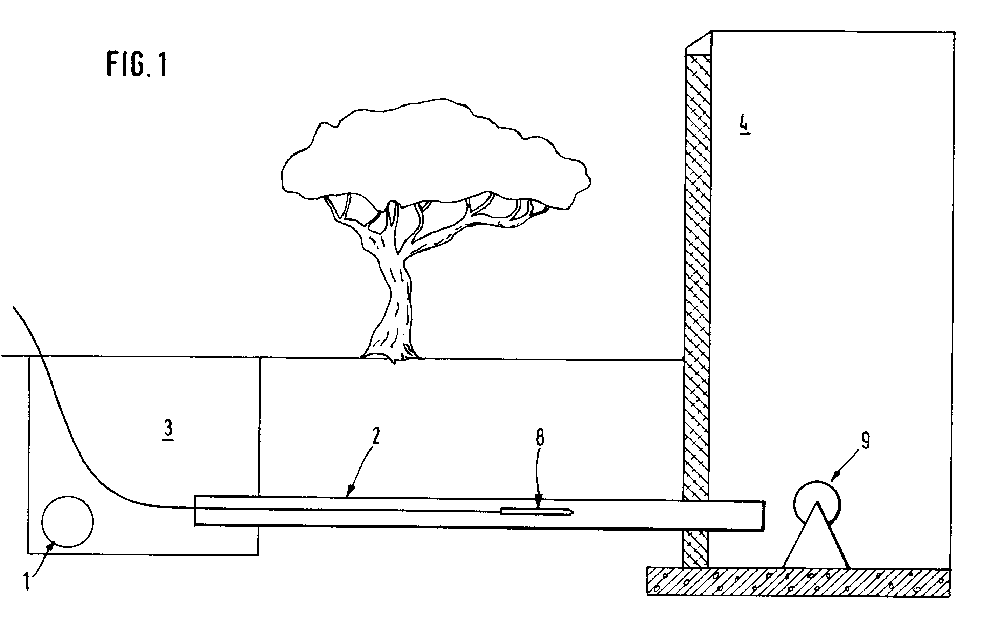

- Fig. 1: einen ersten Verfahrensschritt beim Auswechseln eines Bleirohres gegen ein PE-Rohr,
- Fig. 2: einen zweiten Verfahrensschritt beim Auswechseln des Bleirohres gegen das PE-Rohr,
- Fig. 3: einen dritten Verfahrensschritt beim Auswechseln des Bleirohres gegen das PE-Rohr,
- Fig. 4: einen vierten Verfahrensschritt beim Auswechseln des Bleirohres gegen das PE-Rohr,
- Fig. 5: das Bleirohr im Querschnitt mit eingezogenem Zugseil und drucklosem Schlauch,
- Fig. 6: ein Rohr im Querschnitt mit eingezogenem zugfestem Schlauch und Innendruck form- und reibschlüssig an der Rohrinnenwand,
- Fig. 7: das Bleirohr im Querschnitt mit eingezogenem Zugseil und unter Druck gesetztem Schlauch,
- Fig. 8: die Ankopplung von Zugseil und Schlauch an das Einziehseil beim Einführen in das Bleirohr, und
- Fig. 9: die Kopplung zwischen Zugseil und Bleirohr sowie PE-Rohr beim Herausziehen des Bleirohres und Einziehen des PE-Rohres.

Im Bereich einer Trinkwasser-Versorgungsleitung 1 wird an einer abgehenden Hausanschlußleitung, die als ein Bleirohr 2 ausgebildet ist, eine Baugrube 3 mit einer Grundfläche von beispielsweise 1,50 m x 0,80 m ausgehoben. Das in den Keller eines Hauses 4 führende und eine Länge zwischen etwa 6 und 25 m aufweisende Bleirohr 2 wird in der Baugrube 3 von der Versorgungsleitung 1 und im Keller des Hauses 4 von der Hausleitung getrennt. In das an beiden offenen Enden zugängliche Bleirohr 2 wird von der Baugrube 3 aus eine Ahle 8 bis in den Keller des Hauses 4 geschoben. In diesem befindet sich eine Seiltrommel 9 mit einem aufgewickelten Einziehseil 10. Dieses wird an der Ahle 8 befestigt und durch das Bleirohr 2 zur Baugrube 3 hin gezogen.

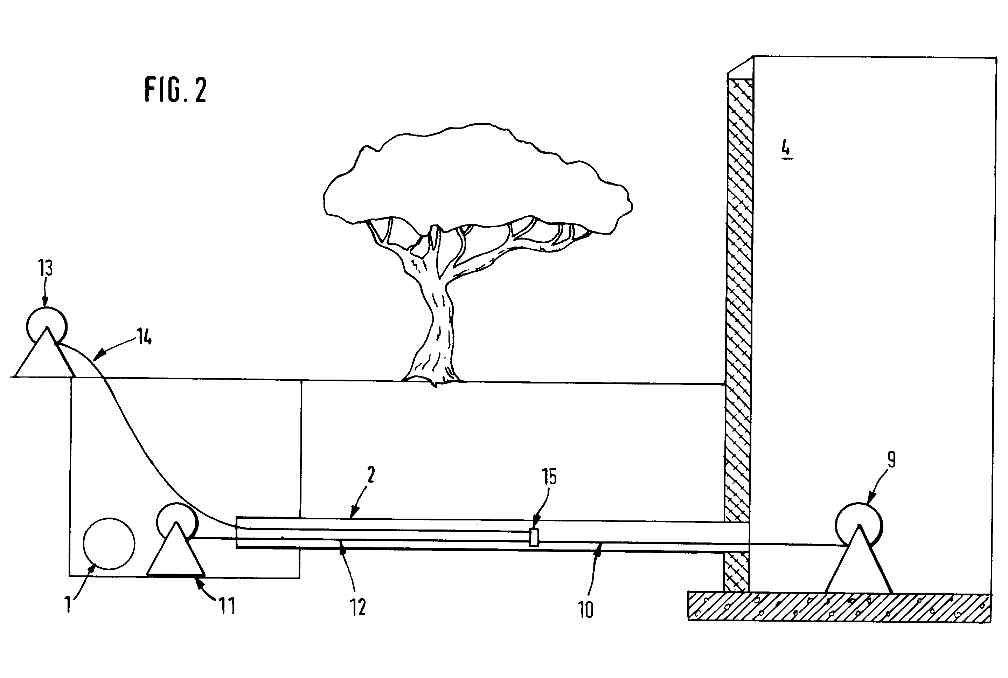

Für den in Fig. 2 dargestellten nachfolgenden Verfahrensschritt wird in der Baugrube 3 eine Seiltrommel 11 mit einem aufgewickelten Zugseil 12 installiert. Aus Platzgründen wird oberhalb der Baugrube 3 eine Schlauchtrommel 13 mit einem aufgewickelten druckfesten Schlauch 14 aufgestellt. Die Schlauchtrommel 13 ist mit einer Drehdurchführung versehen, über die von einer äußeren Quelle eine Flüssigkeit oder ein Gas in den Schlauch 14 geleitet werden kann. Über einen Adapter 15, der auch das freie Ende des Schlauches 14 druckfest verschließt, werden dieser und das Zugseil 12 an das in die Baugrube 3 ragende Ende des Einziehseils 10 angekoppelt und durch das Einziehseil 10 in den Keller des Hauses 4 gezogen. Der Adapter 15 ist so ausgebildet bzw. weist einen solchen Durchmesser auf, daß er beim Durchgang durch das Bleirohr 2 dessen Inneres aufweitet und/oder kalibriert sowie dessen Innenwand säubert und glättet, so daß das Einziehen des ihm nachfolgenden Schlauches 14 erleichtert wird.

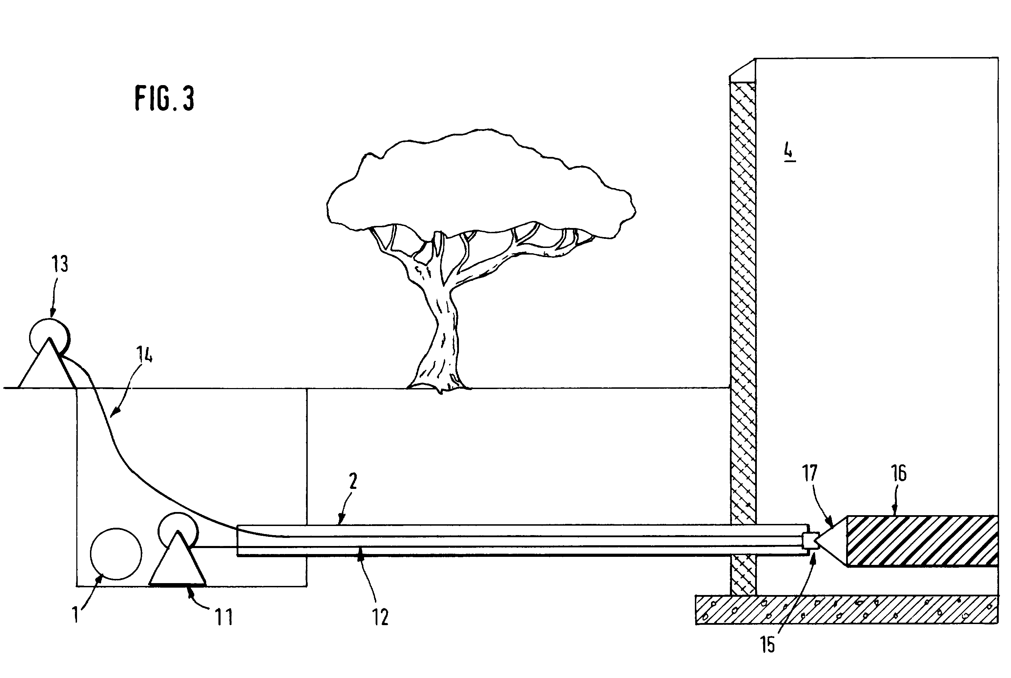

Im Verfahrensschritt nach Fig. 3 wird, nachdem das Einziehseil 10 abgetrennt wurde, im Keller des Hauses 4 ein einzuziehendes PE-Rohr 16 an den Adapter 15 angekoppelt. Wenn das PE-Rohr 16 eine größere Nennweite als das Bleirohr 2 besitzt, dann wird ein Aufweitungskopf 17 zwischen den Adapter 15 und das PE-Rohr 16 gesetzt oder der Adapter wird als Aufweitkopf ausgeführt.

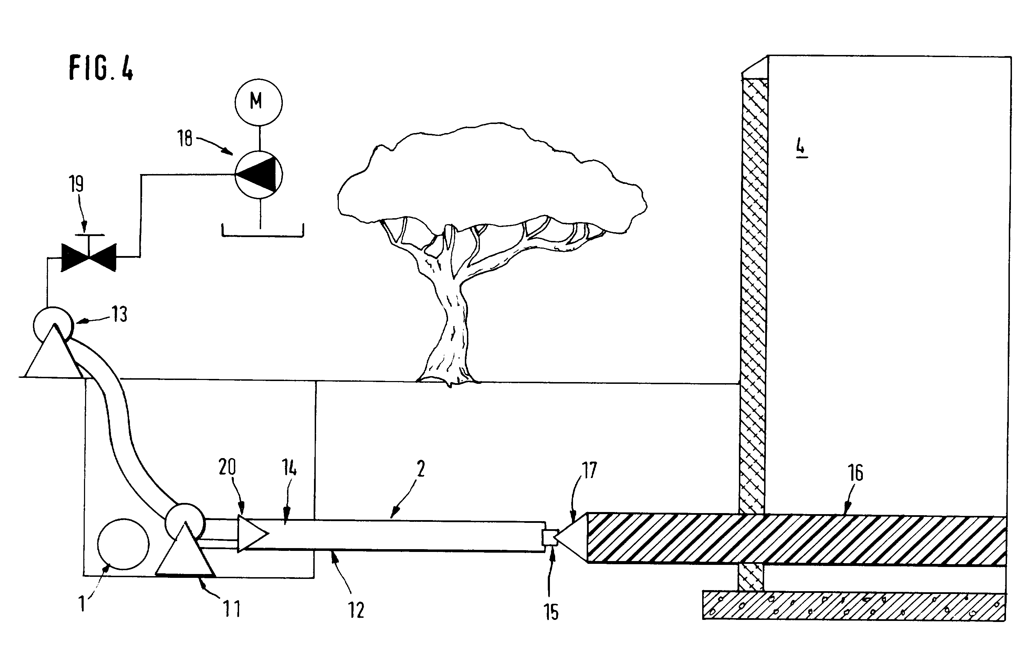

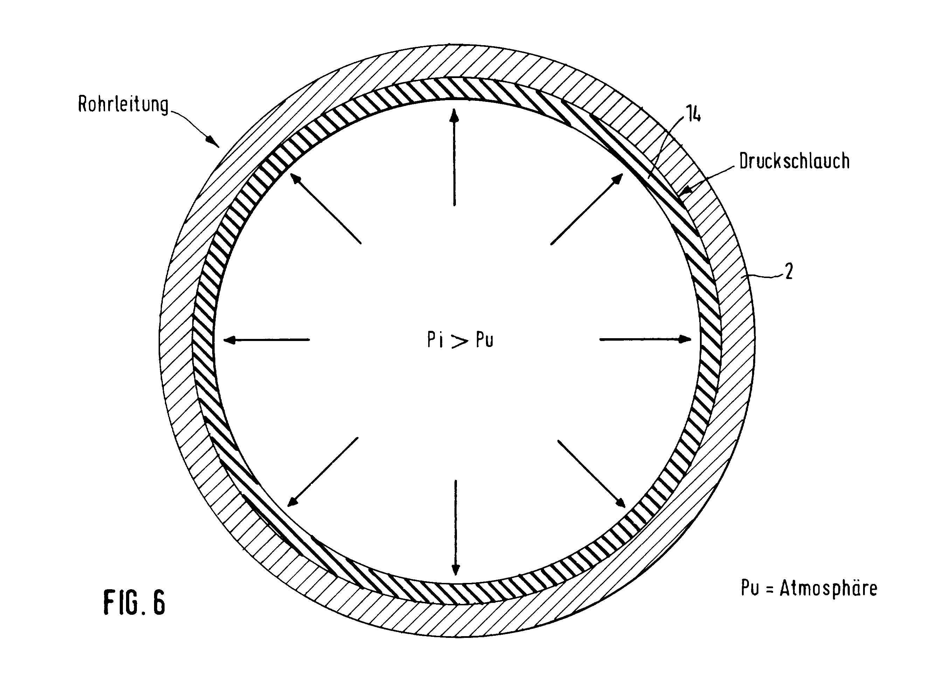

Wie aus Fig. 4 ersichtlich ist, wird nun der Schlauch 14 durch eine motorgetriebene Hydraulikpumpe 18 über ein Ventil 19 und die Drehdurchführung der Schlauchtrommel 13 mit einer Flüssigkeit wie Wasser gefüllt und unter einen ausreichend hohen Innendruck gesetzt, so daß das Zugseil 12 fest gegen die Innenwand des Bleirohres 2 gepreßt wird. Anschließend wird das Zugseil 12 von der Seiltrommel 11 zurückgezogen, wobei durch den hohen Anpreßdruck des Zugseils 12 gegen die Innenwand des Bleirohres 2 eine sich über dessen gesamte Länge erstreckende reib- und formschlüssige Verbindung zwischen diesen ergibt, über die die Zugkraft gleichmäßig in das Bleirohr 2 eingeleitet wird. Das Bleirohr 2 wird daher beim Zurückziehen des Zugseils 12 von diesem mitgenommen, wobei keine örtlichen Belastungsspitzen im Bleirohr 2 auftreten, so daß die Gefahr eines Abreißens nicht besteht. Gleichzeitig wird das über den Aufweitungskopf 17 an den Adapter 15 angekoppelte PE-Rohr 16 in den vom Bleirohr 2 hinterlassenen und vom Aufweitungskopf 17 aufgeweiteten Hohlraum eingezogen.

In der Baugrube 3 ist in Richtung zum Bleirohr 2 hin vor der Seiltrommel 11 eine Schneidvorrichtung 20 installiert, die beispielsweise als Schneidschuh mit Messern oder Schneidrollen ausgebildet ist und das Rohr 2 in Längsrichtung spaltet, so daß es vom Zugseil 12 und vom Schlauch 14 getrennt werden kann. Das Zugseil 12 kann dann auf die Seiltrommel 11 und der Schlauch 14 auf die Schlauchtrommel 13 aufgewickelt werden, wobei der Druck im Schlauch 14 aufrechterhalten wird. Die Seiltrommel 11 und die Schlauchtrommel 13 sind hierzu mit geeigneten Antrieben versehen, wobei von der Seiltrommel 11 auch die zum Herausziehen des Bleirohrs 2 und Einziehen des PE-Rohrs 16 erforderliche Zugkraft aufgebracht wird. Ebenfalls kann der Schlauch 14 mit dem Zugseil 12 und dem eventuell unzerstörten Bleirohr 2 auf der Seiltrommel 11 gemeinsam aufgetrommelt werden. Nachdem das Bleirohr 2 ganz aus dem Erdreich herausgezogen und das PE-Rohr 16 entsprechend bis zur Baugrube 3 vorgezogen sind, können, nachdem der Schlauch 14 in den drucklosen Zustand versetzt wurde, das Zugseil 12 und der Schlauch 14, die über den Adapter 15 miteinander verbunden sind, voneinander getrennt und die Seiltrommel 11 sowie die Schlauchtrommel 13 zu ihrem neuen Einsatzort gebracht werden.

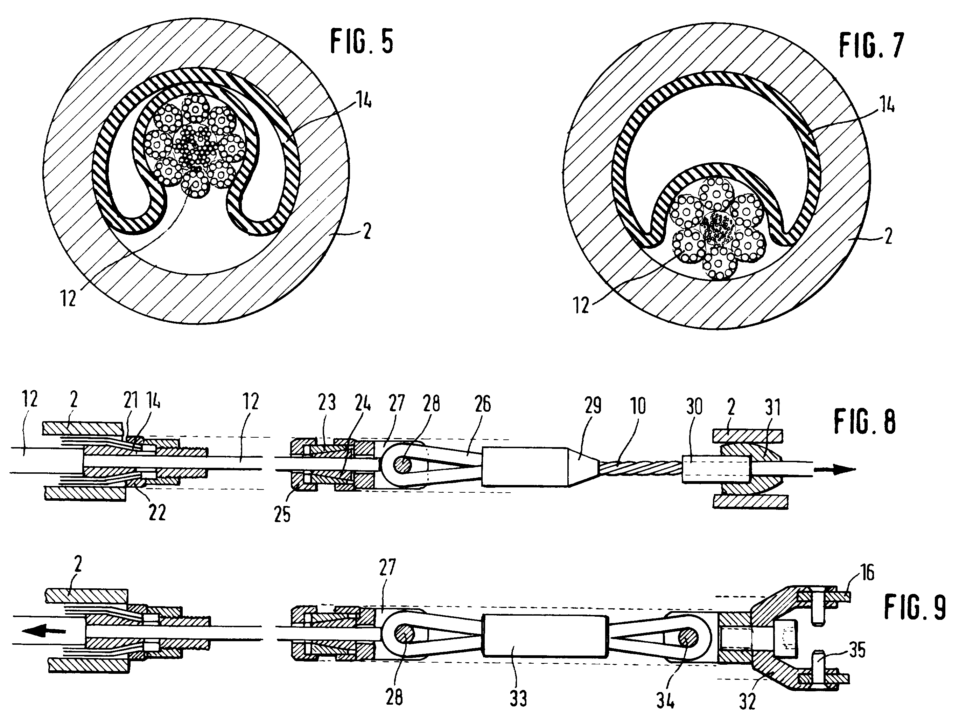

Die Fign. 5 und 7 zeigen das Bleirohr 2 mit eingezogenem Zugseil 12 und Schlauch 14 im Querschnitt, wobei sich der Schlauch 14 in Fig. 5 im drucklosen Zustand befindet und in Fig. 7 mit Flüssigkeit gefüllt ist und unter einem vorgegebenen Innendruck gehalten wird. Durch diesen Innendruck des Schlauches 14 wird das Zugseil 12 gegen die Innenwand des Bleirohres 2 gepreßt, so daß eine reib- und formschlüssige Verbindung zwischen diesen besteht. Die Höhe des erforderlichen Innendrucks des Schlauches 14 richtet sich nach der Kraft pro Längeneinheit, die zum Herausziehen des Bleirohres 2 benötigt wird. Diese ist unter anderem abhängig vom Durchmesser des Bleirohrs 2, von der Auflast des Erdreiches und der Bodenbeschaffenheit bzw. dem Reibungsbeiwert zwischen Erdreich und Bleirohr sowie dem Reibungskoeffizienten zwischen Bleirohr und Zugseil. Fig. 6 zeigt den Einsatz ohne zusätzliches Zugelement, d.h. nur mit dem zugfesten Schlauch 14 mit Beaufschlagung durch Innendruck. Hierbei wird der Schlauch 14 durch den beaufschlagten Innendruck so verformt, daß er gegen die Rohrinnenwandung gepreßt wird. Somit wird eine reib- und formschlüssige Verbindung realisiert.

Fig. 8 zeigt den Kopplungsmechanismus bzw. Adapter 15 zwischen dem Einziehseil 10 und dem Zugseil 12 sowie Schlauch 14, wenn diese in das Bleirohr 2 eingezogen werden. Dieser Zustand entspricht dem in Fig. 2 dargestellten Verfahrensschritt.

Der Schlauch 14 ist am Ende zusammengefaltet und wird zwischen zwei Konen 21 und 22 zusammengepreßt, so daß er hydraulisch dicht oder gasdicht abgeschlossen ist. Beim Zugseil 12 sind am Ende die äußeren Litzen abgetrennt und hart verlötet. Für die Kopplung mit dem Einziehseil 10 werden nur die inneren Litzen verwendet, die jedoch eine für das Einziehen des PE-Rohres 16 ausreichende Zugfestigkeit besitzen. Die inneren Litzen des Zugseils 12 werden über drei in Umfangsrichtung nebeneinander angeordnete, in einen Konus 23 gepreßte Klemmkeile 24 gehalten. Zum Lösen der Klemmkeile 24 ist eine Überwurfmutter 25 vorgesehen. Das zu einer Schlaufe 26 ausgebildete Ende des Einziehseil 10 ist über eine Gabel 27, die mit dem Konus 23 verschraubt ist und in der ein Bolzen 28 aufgenommen ist, mit dem Zugseil 12 verbunden. Eine Preßhülse 29 dient zur Bildung der Schlaufe 26. Eine weitere auf dem Einziehseil 10 angeordnete Preßhülse 30 trägt einen Kalibrierdorn 31, der etwaige Verformungen bzw. Zusammendrückungen des Bleirohres 2 beseitigen und dessen Innenfläche von Ablagerungen befreien und glätten sowie gegebenenfalls den Querschnitt des Bleirohres 2 aufweiten soll.

Fig. 9 zeigt den Kopplungsmechanismus bzw. Adapter 15 zwischen dem Zugseil 12 und dem PE-Rohr 16, wenn das Bleirohr 2 herausgezogen und das PE-Rohr 16 eingezogen werden, d.h. während des in Fig. 4 dargestellten Verfahrensschrittes. Nachdem der in Fig. 7 wiedergegebene Kopplungsmechanismus durch das Einziehseil 10 in den Keller des Hauses 4 gezogen wurde, wird das Einziehseil 10 mit dem Kalibrierdorn 31 durch Lösen des Bolzens 28 abgekoppelt und ein Ziehkopf 32 für das PE-Rohr 16 wird mit der Gabel 27 verbolzt. Die Verbindung zwischen der Gabel 27 und dem Ziehkopf 32 wird durch einen Schlupf 33, der beidseitig mit Bolzen 28 und 34 befestigt ist, realisiert. Der Ziehkopf 32 ist als Aufweitungskopf ausgebildet, d.h. sein Außendurchmesser ist größer als der des Bleirohrs 2. Hierdurch ist es möglich, daß beispielsweise ein Bleirohr mit einem Außendurchmesser von 36 mm durch ein PE-Rohr mit einem Außendurchmesser von 44 mm ersetzt wird. Das PE-Rohr 16 ist am Ziehkopf 32 befestigt.

Das beschriebene Ausführungsbeispiel bezieht sich auf ein Verfahren zum Herausziehen eines im Erdreich verlegten Rohres 2, bei dem zum Herausziehen zusätzlich zu dem Schlauch 14 noch ein Zugelement 12 verwendet wird. Ist die Zugfestigkeit des Schlauches 14 allein ausreichend zum Herausziehen des Rohres 2 und gegebenenfalls Einziehen des PE-Rohres 16, dann kann auf das Zugelement 12 verzichtet werden. Hierdurch wird die Einführung des Schlauches 14 erleichtert. Das freie Ende des drucklos in das Rohr 2 eingeführten Schlauches 14 wird mit Hilfe einer Klemmeinrichtung mit einer hydraulischen oder pneumatischen Zugseilwinde verbunden. Anschließend wird der Schlauch hydraulisch oder pneumatisch mit einem Innendruck versehen, so daß er sich durch elastische Querdehnung vollständig an die Innenwand des Rohres 2 anlegt und durch den Anpreßdruck eine form- und reibschlüssige Verbindung erzeugt wird. Anschließend werden mit Hilfe der Zugseilwinde die erforderliche Zugkraft zum Herausziehen des Schlauches 14 und des Rohres 2 aufgebracht und diese zusammen auf der Trommel der Zugseilwinde aufgewickelt.

Es können mit dem erfindungsgemäßen Verfahren auch andere als aus Blei bestehende Rohre gezogen werden. Weiterhin kann anstelle eines Zugseils auch eine Zugkette oder Zugstange verwendet werden. Auch kann zur Ausübung des Druckes im Schlauch ein Gas, vorzugsweise Luft, eingesetzt werden.

## Patentansprüche

1. Verfahren zum Herausziehen eines im Erdreich verlegten Hohlkörpers, welcher an seinen beiden offenen Enden zugänglich ist,
**dadurch gekennzeichnet ,** daß ein mit einem Innendruck beaufschlagbarer Schlauch (14) im drucklosen Zustand in den Hohlkörper (2) über mindestens einen Teil seiner Länge eingeführt wird, daß der Schlauch (14) unter Anpressen an die Innenwand des Hohlkörpers (2) mit einem Innendruck beaufschlagt wird und daß anschließend unter Aufrechterhaltung des Innendrucks der Hohlkörper (2) in seiner Längsrichtung mittels des Schlauches (14) selbst und/oder durch ein mit dem Schlauch (14) in den Hohlkörper (2) eingeführtes Zugelement (12), das durch Beaufschlagen des Schlauches (14) mit Innendruck gegen die Innenwand des Hohlkörpers (2) gepreßt wird, durch einen Reib- und Formschluß aus dem Erdreich herausgezogen wird.

2. Verfahren nach Anspruch 1, dadurch gekennzeichnet, daß der Schlauch (14) und gegebenenfalls das Zugelement (12) eine Dehnbarkeit in Längsrichtung aufweisen, die größer als die Dehnbarkeit des Hohlkörpers (2) ist.

3. Verfahren nach Anspruch 1, dadurch gekennzeichnet, daß der Schlauch (14) in Längsrichtung im Abstand voneinander Abschnitte aufweist, deren Dehnbarkeit in Längsrichtung größer als die des Hohlkörpers (2) ist.

4. Verfahren nach einem der Ansprüche 1 bis 3, dadurch gekennzeichnet, daß hinter dem in Ziehrichtung hinteren Ende des Hohlkörpers (2) ein neuer Hohlkörper (16) angekoppelt wird, der gleichzeitig mit dem Herausziehen des Hohlkörpers (2) in das Erdreich eingezogen wird.

5. Verfahren nach Anspruch 4, dadurch gekennzeichnet, daß der neue Hohlkörper (16) über einen Adapter (15) mit dem Zugelement (12) verbunden wird.

6. Verfahren nach Anspruch 5, dadurch gekennzeichnet, daß zwischen dem Adapter (15) und dem neuen Hohlkörper (16) ein Aufweitungskopf (17) angeordnet wird.

7. Verfahren nach einem der Ansprüche 1 bis 6, dadurch gekennzeichnet, daß der Schlauch (14) und gegebenenfalls das Zugelement (12) mittels eines Einziehseils (10) in den Hohlkörper (2) eingeführt werden.

8. Verfahren nach Anspruch 7, dadurch gekennzeichnet, daß der Schlauch (14) und gegebenenfalls das Zugelement (12) einerseits und das Einziehseil (10) andererseits über den Adapter (15) miteinander gekoppelt werden.

9. Verfahren nach einem der Ansprüche 5 bis 8, dadurch gekennzeichnet, daß der Adapter (15) beim Einführen des Schlauches (14) und gegebenenfalls des Zugelelementes (12) das Innere des Hohlkörpers (2) aufweitet, kalibriert und/oder glättet.

10. Verfahren nach einem der Ansprüche 7 bis 9, dadurch gekennzeichnet, daß eine Ahle (8) durch den Hohlkörper (2) geführt und anschließend das Einziehseil (10) mit Hilfe der Ahle (8) in entgegengesetzter Richtung durch den Hohlkörper (2) gezogen wird.

11. Verfahren nach einem der Ansprüche 1 bis 10, dadurch gekennzeichnet, daß der herausgezogene Teil des Hohlkörpers (2) während des weiteren Ausziehvorganges mechanisch gespaltet und vom Schlauch (14) sowie gegebenenfalls vom Zugelement (12) getrennt wird.

12. Verfahren nach einem der Ansprüche 1 bis 11, dadurch gekennzeichnet, daß der herauszuziehende Hohlkörper ein Bleirohr (2) ist.

13. Verfahren nach einem der Ansprüche 4 bis 12, dadurch gekennzeichnet, daß der neue Hohlkörper ein Polyethylenrohr (16) ist.

14. Verfahren nach einem der Ansprüche 1 bis 13, dadurch gekennzeichnet, daß das Zugelement ein Seil (12) ist.

15. Verfahren nach einem der Ansprüche 1 bis 13, dadurch gekennzeichnet, daß das Zugelement eine Kette ist.

16. Verfahren nach einem der Ansprüche 1 bis 13, dadurch gekennzeichnet, daß das Zugelement eine Stange ist.

17. Verfahren nach einem der Ansprüche 1 bis 16, dadurch gekennzeichnet, daß der Schlauch (14) in Längsrichtung hochfeste Zugfasern aufweist.

18. Verfahren nach einem der Ansprüche 1 bis 17, dadurch gekennzeichnet, daß der Innendruck des Schlauches (14) durch eine Flüssigkeit bewirkt wird.

19. Verfahren nach einem der Ansprüche 1 bis 17, dadurch gekennzeichnet, daß der Innendruck des Schlauches (14) durch ein Gas bewirkt wird.

20. Verfahren nach einem der Ansprüche 1 bis 19, dadurch gekennzeichnet, daß der Hohlkörper (2) für einen Hausanschluß verwendet wird und an dem in die Hauptleitung (1) mündenden Ende über eine Baugrube (3) und an dem in das Haus (4) führenden Ende über den Hauskeller oder über eine vor dem Haus angeordnete Baugrube zugänglich ist.

## Claims

1. Process of extracting a hollow element laid in the ground which is accessible at its two open ends, **characterised in that** a hose (14), which can be loaded with an internal pressure, is in its unpressurised state inserted over at least a portion of its length into the hollow element (2), that the hose (14) is loaded with an internal pressure whilst being pressed against the inside wall of the hollow element (2), and subsequently the hollow element (2) is, whilst maintaining the inside pressure, pulled out of the ground in its longitudinal direction by means of frictional or positive connection by the hose (14) itself and/or by a pulling element (12), which has been inserted with the hose (14) into the hollow element (2) and which is pressed against the inside wall of the hollow element (2) by loading the hose (14).

2. Process according to Claim 1, **characterised in that** the hose (14) and, if appropriate, the pulling element (12) have an expandability in the longitudinal direction which is greater than the expandability of the hollow element (2).

3. Process according to Claim 1, **characterised in that** the hose (14) comprises in the longitudinal direction spaced sections the expandability of which in the longitudinal direction is greater than that of the hollow element (2).

4. Process according to one of Claims 1 to 3, **characterised in that**, as seen in the pulling direction, behind the rear end of the hollow element (2) is connected a new hollow element (16) which is pulled into the ground whilst the hollow element (2) is pulled out.

5. Process according to Claim 4, **characterised in that** the new hollow element (16) is connected to the pulling element (12) via an adapter (15).

6. Process according to Claim 5, **characterised in that** an expansion head (17) is arranged between the adapter (15) and the new hollow element (16).

7. Process according to one of Claims 1 to 6, **characterised in that** the hose (14) and, if appropriate, the pulling element (12) are fed into the hollow element (2) by means of a pulling-in rope (10).

8. Process according to Claim 7, **characterised in that** the hose (14) and, if appropriate, the pulling element (12) on the one hand and the pulling-in rope (10) on the other hand are joined via adapter (15).

9. Process according to one of Claims 5 to 8, **characterised in that** the adapter (15) expands, calibrates and/or smoothes the interior of the hollow element (2) during insertion of the hose (14) and, if appropriate, the pulling element (12).

10. Process according to one of Claims 7 to 9, **characterised in that** an awl (8) is fed through the hollow element (2), and thereafter the pulling-in rope (10) is pulled with the aid of the awl (8) in the opposite direction through the hollow element (2).

11. Process according to one of Claims 1 to 10, **characterised in that** the pulled out portion of the hollow element (2) is mechanically split during continued pullout an separated from the hose (14) and, if appropriate, from the pulling element (12).

12. Process according to one of Claims 1 to 11, **characterised in that** the hollow element which is to be pulled out is a lead pipe (2).

13. Process according to one of Claims 4 to 12, **characterised in that** the new hollow element is a polyethylene pipe (16).

14. Process according to one of Claims 1 to 13, **characterised in that** the pulling element is a rope (12).

15. Process according to one of Claims 1 to 13, **characterised in that** the pulling element is a chain.

16. Process according to one of Claims 1 to 13, **characterised in that** the pulling element is a rod.

17. Process according to one of Claims 1 to 16, **characterised in that** the hose (14) comprises longitudinally extremely strong pulling fibres.

18. Process according to one of Claims 1 to 17, **characterised in that** the inside pressure of the hose (14) is generated by a fluid.

19. Process according to one of Claims 1 to 17, **characterised in that** the inside pressure of the hose (14) is generated by a gas.

20. Process according to one of Claims 1 to 19, **characterised in that** the hollow element (2) is applied for a house connection and accessible at the end merging into the mains pipe (1) above the cellar or via a manhole arranged in front of the house.

## Revendications

1. Procédé d'extraction d'un corps creux placé dans le sol et qui est accessible par ses deux extrémités ouvertes, caractérisé en ce qu'on introduit, à l'état sans pression, un tuyau (14) pouvant être chargé par une pression intérieure, dans le corps creux (2) sur au moins une partie de sa longueur, qu'on charge le tuyau (14) avec une pression intérieure tout en le comprimant contre la paroi intérieure du corps creux (2), et qu'ensuite, tout en maintenant la pression intérieure, on extrait le corps creux (2) du sol, selon une liaison par friction et par formes complémentaires, dans sa direction longitudinale à l'aide du tuyau (14) lui-même et/ou à l'aide d'un élément de traction (12), qui est inséré avec le tuyau (14) dans le corps creux (2) et est repoussé contre la paroi intérieure du corps creux (2) sous l'effet de la charge du tuyau (14) avec une pression intérieure.

2. Procédé selon la revendication 1, caractérisé en ce que le tuyau (14) et éventuellement l'élément de traction (12) possèdent une extensibilité dans la direction longitudinale, qui est supérieure à l'extensibilité du corps creux (2).

3. Procédé selon la revendication 1, caractérisé en ce que le tuyau (14) possède, dans sa direction longitudinale des parties distantes l'une de l'autre dans la direction longitudinale et dont l'extensibilité dans la direction longitudinale est supérieure à celle du corps creux (2).

4. Procédé selon l'une des revendications 1 à 3, caractérisé en ce qu'en arrière de l'extrémité arrière dans la direction de traction on accouple un nouveau corps creux (16) que l'on introduit dans le sol en même tant que s'effectue l'extraction du corps creux (2).

5. Procédé selon la revendication 4, caractérisé en ce qu'on relie le nouveau corps creux (16) à l'élément de traction (12) par l'intermédiaire d'un adaptateur (15).

6. Procédé selon la revendication 5, caractérisé en ce qu'on dispose une tête d'élargissement (17) entre l'adaptateur (15) et le nouveau corps (16).

7. Procédé selon l'une quelconque des revendications 1 à 6, caractérisé en ce qu'on introduit le tuyau (14) et éventuellement l'élément de traction (12) dans le corps creux (2) à l'aide d'un câble de traction (10).

8. Procédé selon la revendication 7, caractérisé en ce qu'on accouple entre eux le tuyau (14) et éventuellement l'élément de traction (12) d'une part et le câble de traction (10) d'autre part, par l'intermédiaire de l'adaptateur (15).

9. Procédé selon l'une des revendications 5 à 8, caractérisé en ce que lors de l'introduction du tuyau (14) et éventuellement de l'élément de traction (12), l'adaptateur (15) élargit, calibre et/ou lisse l'intérieur du corps creux (2).

10. Procédé selon l'une des revendications 7 à 9, caractérisé en ce qu'on fait passer un alésoir (8) dans le corps creux (2) et qu'ensuite on tire le câble de traction (10) à l'aide de l'alésoir (8) dans la direction opposée à travers le corps creux (2).

11. Procédé selon l'une des revendications 1 à 10, caractérisé en ce qu'on empile mécaniquement la partie ressortie du corps creux (2) pendant la poursuite de l'opération d'extraction et qu'on la sépare du tuyau (14) ainsi que, éventuellement, de l'élément de traction (12).

12. Procédé selon l'une des revendications 1 à 11, caractérisé en ce que le corps creux devant être extrait est un tube de plomb (2).

13. Procédé selon l'une des revendications 4 à 12, caractérisé en ce que le nouveau corps creux est un tube de polyéthylène (16).

14. Procédé selon l'une des revendications 1 à 13, caractérisé en ce que l'élément de traction est un câble (12).

15. Procédé selon l'une des revendications 1 à 13, caractérisé en ce que l'élément de traction est une chaîne.

16. Procédé selon l'une des revendications 1 à 13, caractérisé en ce que l'élément de traction est une barre.

17. Procédé selon l'une des revendications 1 à 16, caractérisé en ce que le tuyau (14) possède des fibres travaillant en traction très résistantes dans la direction longitudinale.

18. Procédé selon l'une des revendications 1 à 17, caractérisé en ce que la pression intérieure dans le tuyau (14) est produite par un liquide.

19. Procédé selon l'une des revendications 1 à 17, caractérisé en ce que la pression intérieure dans le tuyau (14) est produite par un gaz.

20. Procédé selon l'une àes revendications 1 à 19, caractérisé en ce que le corps creux (2) est utiiisé pour un raccordement domestique et est accessible par l'intermédiaire d'une fosse (3) au niveau de l'extrémité débouchant dans la conduite principale (1) et par l'intermédiaire d'une cave domestique ou d'une fosse disposée devant la maison, au niveau de l'extrémité pénétrant dans la maison (4).
